# EUROPEAN PATENT APPLICATION

(11) **EP 2 489 454 A1**
(43) Date of publication of application: **22.08.2012**
(21) Application number: 10823389.1
(22) Date of filing: 12.10.2010
(51) Int. Cl.: B23C 5/20, B23B 27/14, B23C 5/06

(54) **CUTTING INSERT AND ROTARY TOOL WITH A REPLACEABLE BLADE EDGE**

(30) Priority: 13.10.2009 JP 2009236599
(71) Applicant: Mitsubishi Materials Corporation, Chiyoda-ku Tokyo 100-8117 (JP)
(72) Inventor: SAITO Takayoshi, Joso-shi Ibaraki 300-2795 (JP); DAIGUJI Hisashi, Joso-shi Ibaraki 300-2795 (JP)
(74) Representative: HOFFMANN EITLE
(86) International application number: PCT/JP2010/067896
(87) International publication number: WO 2011/046121

(57) **Abstract**

A rake face (12) is formed on the both sides of an insert main body facing outside in the thickness direction thereof to make a pair, a cutting edge (14) is arranged respectively on each side which constitutes an outer periphery of the rake face (12), the cutting edge (14) is provided with a major cutting edge (18A) which is arranged at the center of the side and a minor cutting edge (18B) which is arranged at one end of the side and extends so as to intersect with a direction at which the major cutting edge (18A) extends when viewed from a direction opposing the rake face (12). A connection part (20) in which a cross section orthogonal to the thickness direction is formed in a concave curved shape and which is arranged on the opposite side of the major cutting edge (18A) across the minor cutting edge (18B) and adjacent to the minor cutting edge (18B) is formed on the insert main body over the entire thickness direction of the insert main body. Of the pair of rake faces (12), each cutting edge (14) on an outer periphery of a first rake face (12A) and each cutting edge (14) on an outer periphery of a second rake face (12B) have rotation symmetry with each other.

## Description

### TECHNICAL FIELD

The present invention relates to a cutting insert and a replaceable insert-type rotating tool.
The present application claims the right of priority to Japanese Patent Application No. 2009-236599 filed on October 13, 2009, in Japan, with the content cited herewith.

### BACKGROUND ART

Conventionally, as a cutting tool for flat working a metal material (work piece), there is known a face milling cutter (replaceable insert-type rotating tool) which is provided with a tool main body having a substantially disk-like shape and rotating around an axis line and a plurality of cutting inserts mounted on an outer circumference of the leading end of the tool main body. The cutting insert is formed, for example, in a tetragonal plate shape and formed with a hard material such as cemented carbide. The cutting insert is mounted detachably on a plurality of insert seats arranged on the outer circumference of the leading end of the tool main body. Further, the cutting insert is provided with a rake face facing forward in a rotating direction of the tool main body, a flank face continuing to the rake face, and a cutting edge formed at an intersecting ridge line portion between the rake face and the flank face.

On cutting, the tool main body is rotated at high speeds around the axis line thereof and moves in a direction intersecting with the axis line. Thereby, of cutting edges of the cutting insert, a major cutting edge which is directed outside in a radial direction of the tool main body cuts into a work piece, and a minor cutting edge which is directed at the leading end of the tool main body in an axis direction flat works a machined surface of the work piece.

In the above-described face milling cutter, the tool main body moves in a direction intersecting with the axis line at a relatively high speed (hereinafter, abbreviated as "high speed feeding"), thereby increasing the productivity accordingly. However, where a face milling cutter is used to cut a work piece made with, for example, a difficult to cut hard material, excessive loads are imparted to the cutting insert due to the high speed feeding, resulting in earlier damage or wear of the cutting edge. In this case, the cutting insert is frequently replaced, thus resulting in increased production costs.

In order to prevent a frequent replacement of the cutting insert, there has been proposed, for example, a throw-away tip (cutting insert) disclosed in Patent Document 1. This cutting insert is that in which a rake face is provided on both sides of the cutting insert in a thickness direction thereof to make a pair, and a pair of cutting edges are respectively formed on an outer periphery of each of the rake faces. Due to the above-described constitution, one cutting insert is provided with four cutting edges.

There is also known a cutting insert (type: P675) for a difficult to cut material which is described in Non-Patent Document 1. This cutting insert is provided with a rake face only on one side of the cutting insert in the thickness direction, and each of the four cutting edges formed on an outer periphery of the rake face is provided with a major cutting edge, a minor cutting edge, and a corner edge. All the major cutting edge, the minor cutting edge and the corner edge are in contact with a positive flank face (positive flank face). The cutting insert has a corner angle which is set at 75° (that is, a cutting edge angle is set at 15°). In addition, the cutting edge is reduced in cutting resistance per unit length, which is suitable for the high speed feeding.

### [Prior Art Documents]

### [Patent Document]

Patent Document 1: Japanese Published Unexamined Utility Model Application No. Sho 47-30087
[Non-Patent Document]

Non-Patent Document 1: "Diatitanit, Cutting Tool," Mitsubishi Metal Corp., issued in October 1982, p. 191, 199, 200

### SUMMARY OF THE INVENTION

### [Problems to be Solved by the Invention]

However, in the cutting insert described in Patent Document 1, the number of cutting edges available for one cutting insert is only four arranged on both sides of the rake face. There has been a demand for increasing the number of cutting edges available for one cutting insert in view of reductions in machining costs.

Further, in the cutting insert described in Non-Patent Document 1, the major cutting edge of the cutting edge is in contact with a positive flank face to secure the cutting performance. However, as compared with other cutting inserts in which a major cutting edge is in contact with a negative flank face (negative flank face), it is not necessarily true that the strength of the tip of the cutting edge is sufficiently secured.

The present invention has been made in view of the above situation, an object of which is to provide a cutting insert which can be expected to extend the service life of a tool and able to reduce production costs and a replaceable insert-type rotating tool which uses this cutting insert.

### [Means for Solving the Problems]

In order to achieve the above object, the present invention proposes the following means.
The present invention is a cutting insert which is provided with an insert main body formed in a polygonal plate shape, a rake face which is a polygonal face of the insert main body, a flank face continuing to the rake face, and a cutting edge formed at an intersecting ridge line portion between the rake face and the flank face. The rake face is formed on both sides of the insert main body facing outside in the thickness direction to make a pair, and the cutting edge is arranged respectively on each side which constitutes an outer periphery of the rake face. The cutting edge is provided with a major cutting edge which is arranged at the center of the side and a minor cutting edge which is arranged on one end of the side and extends so as to intersect with a direction at which the major cutting edge extends, when viewed in a direction opposing the rake face. A connection part in which a cross section orthogonal to the thickness direction is formed in a concave curved shape and which is arranged on the opposite side of the major cutting edge across the minor cutting edge and adjacent to the minor cutting edge is formed on the insert main body over the entire length in the thickness direction of the insert main body. Of the pair of rake faces, each cutting edge on an outer periphery of a first rake face and each cutting edge on an outer periphery of a second rake face have rotation symmetry with each other.

According to the cutting insert of the present invention, the rake face is formed on both sides of the insert main body to make a pair, and the cutting edge is arranged respectively on each side which constitutes the outer periphery of the rake face. Thereby, for example, where the insert main body is a tetragonal plate shape, eight cutting edges are formed in total. Therefore, the number of cutting edges available for one cutting insert is increased, which can be expected to extend the service life of a tool.

That is, this cutting insert is able to use not only a cutting edge installed on each side of the first rake face, of the pair of rake faces, but also a cutting edge installed on each side of the second rake face. More specifically, each cutting edge on the outer periphery of the first rake face and each cutting edge on the outer periphery of the second rake face have rotation symmetry with each other. Therefore, where a cutting edge is no longer usable due to damage, wear or the like, the cutting insert concerned is turned inside out and again mounted on a cutting tool, by which it is possible to easily arrange a new cutting edge at the same position at which the above cutting edge has been mounted. According to the above-described constitution, the number of cutting edges available for one cutting insert is greatly increased to reduce production costs of cutting.

Further, the connection part, the cross section of which is formed in a concave curved shape, is arranged on the insert main body so as to be adjacent to the minor cutting edge and formed over the entire length thereof in the thickness direction of the insert main body. Thereby, chips are discharged more efficiently and the minor cutting edge is secured for a sufficient edge length at the same time. Still further, even if the cutting edge wears off, axial force is less likely to increase. Thereby, accurate cutting can be secured stably. In addition, formation of the connection part makes it relatively easy to produce the cutting insert and secure product quality sufficiently, even if each cutting edge on the outer periphery of the first rake face and each cutting edge on the outer periphery of the second rake face have rotation symmetry with each other, as described above.

In the cutting insert of the present invention, the cutting edges arranged on each side of the rake face may be in rotation symmetry with each other around the center axis of the rake face.

According to the cutting insert of the present invention, the cutting edges arranged on each side of the rake face are formed in rotation symmetry with each other around the center axis of the rake face. Therefore, where a cutting edge is no longer usable due to damage, wear or the like, by a simple procedure in which the cutting insert is turned around the center axis and mounted again, a new cutting edge can be used. Further, where the cutting insert is again mounted on the cutting tool in the manner described above, a new cutting edge can be easily arranged at the same position at which the above cutting edge has been mounted. This facilitates the work performance.

Further, in the cutting insert of the present invention, the connection part may extend in parallel in the thickness direction of the insert main body.

According to the cutting insert of the present invention, since the connection part extends in parallel in the thickness direction of the insert main body, the cutting insert can be easily prepared by press working in the thickness direction.

Further, in the cutting insert of the present invention, the flank face may be provided with a major flank face continuing to the major cutting edge and a minor flank face continuing to the minor cutting edge. The minor flank face may incline so as to move backward from an outer face of the insert main body in line with moving away from the minor cutting edge.

According to the cutting insert of the present invention, since the minor flank face is a so-called positive flank face which inclines so as to move backward from the outer face of the insert main body in line with moving away from the minor cutting edge, chips can be discharged more efficiently. Thereby, it is possible to prevent damage to a machined surface of a work piece caused by chips which are produced on cutting and remain in the vicinity of the machined surface. Therefore, the machined surface is sufficiently secured for accuracy.

Further, in the cutting insert of the present invention, a cutting edge angle formed between an extended line of the major cutting edge and the minor cutting edge may be from 5° or more to 25° or less, when viewed in a direction opposing the rake face.

According to the cutting insert of the present invention, the cutting edge angle is from 5° or more to 25° or less. Thus, where a work piece is cut by using a cutting tool on which the cutting insert is mounted, the cutting edge is reduced in cutting resistance per unit length to result in a sufficient increase in axial force. That is, where cutting is performed at a constant feeding rate and cutting rate, a relatively low cutting edge angle, as described above, allows the major cutting edge to be in contact with the work piece over a longer distance, and chips are decreased in thickness. Thereby, the cutting force is decentralized to the major cutting edge, by which the cutting edge is reliably reduced in cutting resistance per unit length. Therefore, damage to the tip of the cutting edge or the like is prevented, which can be expected to further extend the service life of a tool.

More specifically, where the cutting edge angle is less than 5°, the major cutting edge is unable to cut reliably into a work piece at a sufficient height. And this cutting edge angle is not practically usable on cutting. Where the cutting edge angle is in excess of 25°, the major cutting edge is unable to be reliably in contact with the work piece over a sufficient length. Thus, the cutting edge is not reduced in cutting resistance per unit length to result in decreased axial force. As a result, there is a possibility that the cutting edge may be damaged earlier due to excessive loads.

Further, in the cutting insert of the present invention, the major cutting edge may be formed so as to give a convex curved shape, when viewed in a direction opposing the flank face.

According to the cutting insert of the present invention, the major cutting edge is formed in a convex curved shape when viewed in a direction opposing the flank face. It is, thus, possible to soften the impact to the tip of the major cutting edge when the major cutting edge cuts into a work piece and also prevent damage to the major cutting edge. Further, chip discharge performance improves.

Further, in the cutting insert of the present invention, the rake face may incline so as to move backward from the outer face of the insert main body in line with moving away from the major cutting edge, and the major cutting edge may be greater in rake angle at both ends of the major cutting edge than at the center of the major cutting edge.

According to the cutting insert of the present invention, since the rake face is that in which the major cutting edge is greater in rake angle at both ends thereof than at the center thereof, chip discharge performance improves.

Further, in the cutting insert of the present invention, the cutting edge may be provided with a corner edge which is positioned between the major cutting edge and the minor cutting edge to connect smoothly the major cutting edge with the minor cutting edge.

According to the cutting insert of the present invention, since the cutting edge is provided with the corner edge which connects smoothly the major cutting edge with the minor cutting edge, it is possible to more reliably prevent damage to the cutting edge. That is, the major cutting edge and the minor cutting edge extend so as to intersect with each other, by which simple coupling of the major cutting edge to the minor cutting edge as they are will produce a cornered part. However, the cornered part is liable to cutting resistance and easily damaged, which is not preferable for the cutting edge. Therefore, as with the present invention, a smooth corner edge is formed between the major cutting edge and the minor cutting edge to reliably prevent damage to the cutting edge.

Further, the present invention is a replaceable insert-type rotating tool which is provided with a tool main body formed in a disk-like shape and the above-described plurality of cutting inserts which are mounted detachably on an outer circumference of the leading end of the tool main body. The tool main body rotates around an axis line of the tool main body, by which the cutting inserts cut a work piece.

According to the replaceable insert-type rotating tool of the present invention, highly accurate cutting can be performed stably to reduce production costs on cutting.

### [Effects of the Invention]

The cutting insert and the replaceable insert-type rotating tool of the present invention can be expected to extend the service life of a tool, thereby reducing production costs.

### BRIEF DESCRIPTION OF THE DRAWINGS

Fig. 1 is a perspective view which shows a replaceable insert-type rotating tool of one embodiment of the present invention.
Fig. 2 is a side view which shows the replaceable insert-type rotating tool of one embodiment of the present invention.
Fig. 3 is a front elevational view which shows the replaceable insert-type rotating tool of one embodiment of the present invention.
Fig. 4 is a perspective view which shows a cutting insert on the replaceable insert-type rotating tool of one embodiment of the present invention.
Fig. 5 is a front elevational view of the cutting insert shown in Fig. 4, when viewed in a direction opposing a rake face.
Fig. 6 is a side view of the cutting insert shown in Fig. 4, when viewed in a direction opposing a flank face.
Fig. 7 is a magnified front elevational view which shows one cutting edge arranged on each side of the rake face of the cutting insert of one embodiment of the present invention.
Fig. 8 is a perspective view which shows a modified example of the cutting insert of one embodiment of the present invention.
Fig. 9 is a front elevational view of the cutting insert shown in Fig. 8, when viewed in a direction opposing the rake face.
Fig. 10 is a side view of the cutting insert shown in Fig. 8, when viewed in a direction opposing the flank face.

### BEST MODE FOR CARRYING OUT THE INVENTION

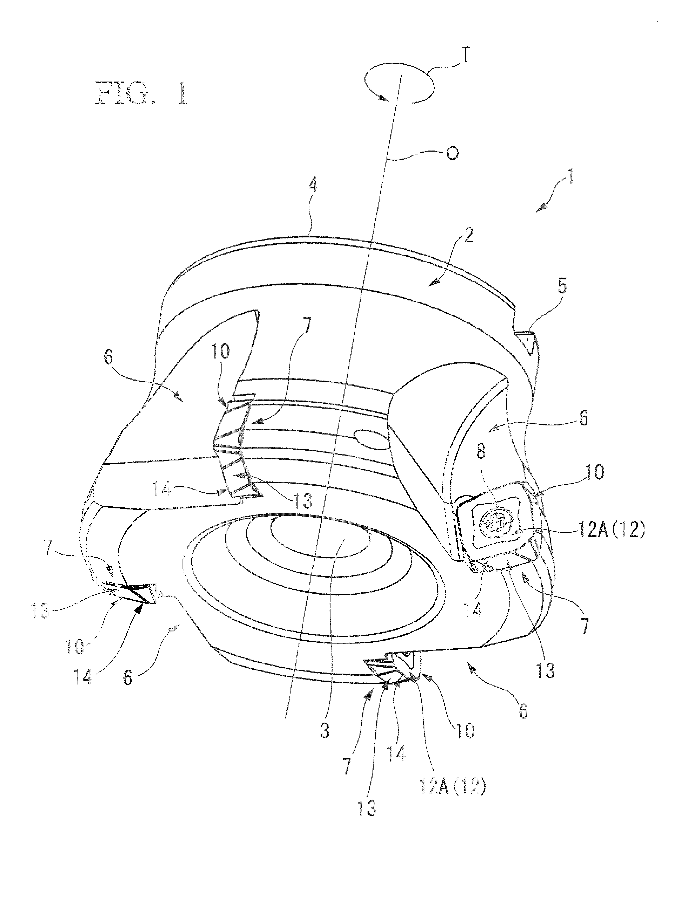

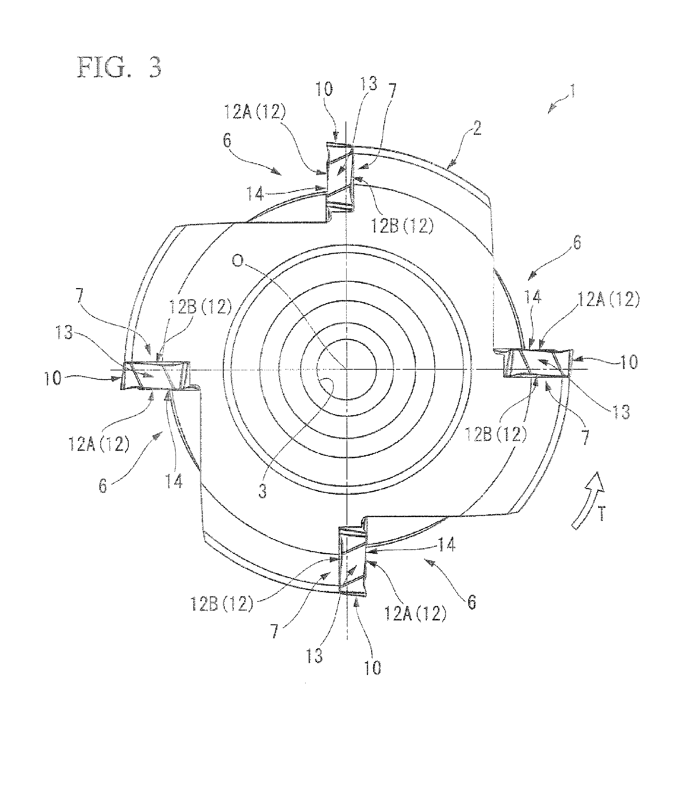

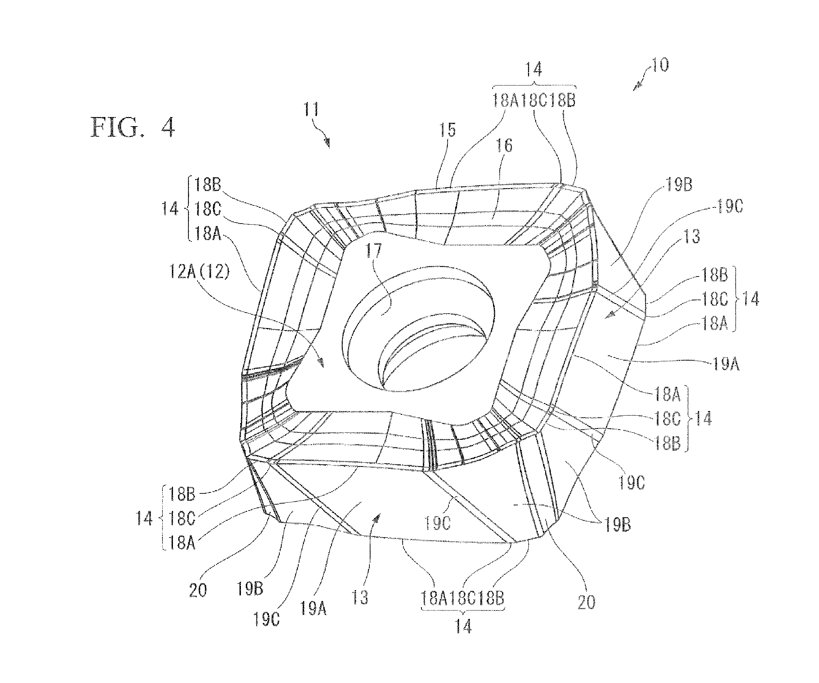

Each of Fig. 1 to Fig. 3 shows a replaceable insert-type milling cutter 1 which is one embodiment of the replaceable insert-type rotating tool in the present invention. Further, each of Fig. 4 to Fig. 7 shows one embodiment of a cutting insert 10 which is used in the replaceable insert-type milling cutter 1. This replaceable insert-type milling cutter 1 is a replaceable insert-type high speed feeding milling cutter which is used in high speed feeding work. In addition, the cutting insert 10 is a cutting insert for high speed feeding work.

As shown in Fig. 1 to Fig. 3, in the replaceable insert-type milling cutter 1, a tool main body 2 thereof is formed in a substantially disk-like shape at the center of an axis line O. A tool attaching hole 3 which extends along the axis line O is formed at the center of the tool main body 2 in a radial direction to penetrate through the tool main body 2. A pair of key grooves 5, 5 extending outside in the radial direction from an opening border of the tool attaching hole 3 are formed on an end face 4 at the rear end of the tool main body 2 along the direction of the axis line O. After these key grooves 5, 5 are fitted into a key installed at the leading end of a main shaft of a machine tool (not shown), the tool main body 2 is attached to the leading end of the main shaft with a bolt inserted through the tool attaching hole 3. In the replaceable insert-type milling cutter 1, the tool main body 2 rotates around the axis line O thereof in a tool rotating direction T, by which a work piece is cut by a cutting insert 10 to be described later.

A plurality of chip pockets 6 which are notched on an outer face of the tool main body 2 and opened toward the leading end outside in the radial direction are formed, with intervals kept circumferentially, at the end of the leading end of the tool main body 2 along the direction of the axis line O. Further, an insert seat 7 notched in a substantially square-shape hole is formed on a wall face of the chip pocket 6 which is arranged backward in the tool rotating direction T and faces forward in the tool rotating direction T.

Further, a female thread hole 7A is drilled on a bottom of the insert seat 7 facing forward in the tool rotating direction T. The cutting insert 10 is mounted on the insert seat 7 by inserting a clamp screw 8 into a through hole 17 (which is to be described later) of the cutting insert 10 and screwing the clamp screw into the female thread hole 7A. Still further, the clamp screw 8 is removed, by which the cutting insert 10 is detached from the insert seat 7. Accordingly, the cutting insert 10 is mounted detachably several times on the insert seat 7 at an outer circumference of the leading end of the tool main body 2.

The cutting insert 10 is made with a hard material such as cemented carbide and provided with an insert main body 11 formed in a square flat plate shape, a rake face 12 which is a square face of the insert main body 11, a plurality of substantially rectangular-shape flank faces 13 which are arranged around the rake face 12 to continue to the rake face 12, and a cutting edge 14 which is formed at an intersecting ridge line portion between the rake face 12 and the flank face 13.

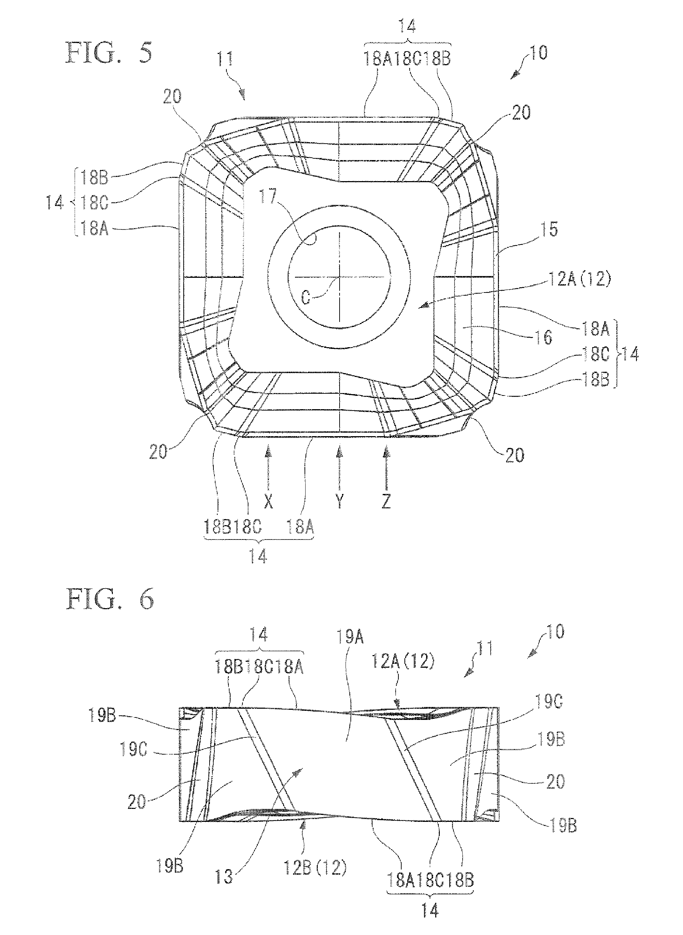

More specifically, as shown in Fig. 4 to Fig. 6, in the cutting insert 10, the both sides, each of which faces outside in the thickness direction of the insert main body 11 (the vertical direction in Fig. 6), are formed in a square-shape face. These square-shape faces are the pair of rake faces 12, 12. Further, the cutting edge 14 is arranged respectively on each side which constitutes an outer periphery of the rake face 12. Thereby, the cutting insert 10 of the present embodiment has a total of eight cutting edges 14. Still further, as shown in Fig. 1 to Fig. 3, with the cutting insert 10 mounted on the tool main body 2, in the cutting insert 10, of the pair of rake faces 12, a first rake face 12A faces forward in the tool rotating direction T, while a second rake face 12B is in contact with the bottom of the insert seat 7.

Further, a through hole 17 which penetrates through the insert main body 11 in the thickness direction is formed on the center axis C of the rake face 12. The above-described clamp screw 8 is inserted into the through hole 17. Still further, an inner circumferential face of the through hole 17 is made to be the largest in internal diameter at the both ends in the thickness direction and reduced gradually and smoothly in diameter in line with moving from these both ends to the center in the thickness direction, thereby forming such a cross section that is a convex curved shape.

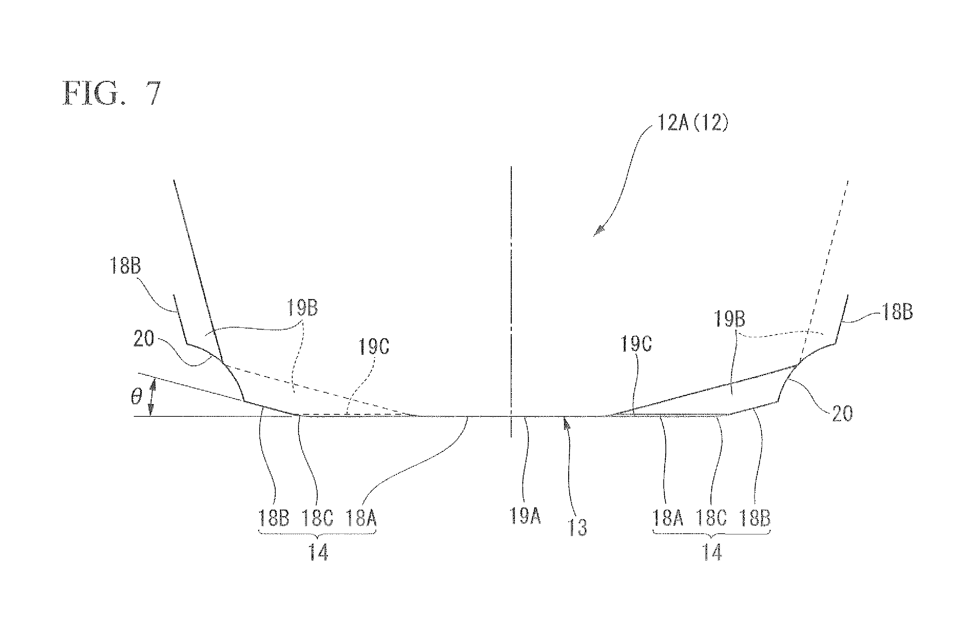

Fig. 7 is a magnified front elevational view which shows a cutting edge 14 arranged at one of four sides which form the outer periphery of the rake face 12 shown in Fig. 5. As shown in Fig. 7, when viewed from the front in a direction opposing the rake face 12, the cutting edge 14 is provided with a major cutting edge 18A which is arranged at the center of the side to extend in a straight line, a linear minor cutting edge 18B which is arranged at one end of the side (the left end in Fig. 7) and extends so as to intersect with a direction at which the major cutting edge 18A extends, and a circular-arc corner edge 18C which is positioned between the major cutting edge 18A and the minor cutting edge 18B and smoothly connecting the major cutting edge 18A with the minor cutting edge 18B.

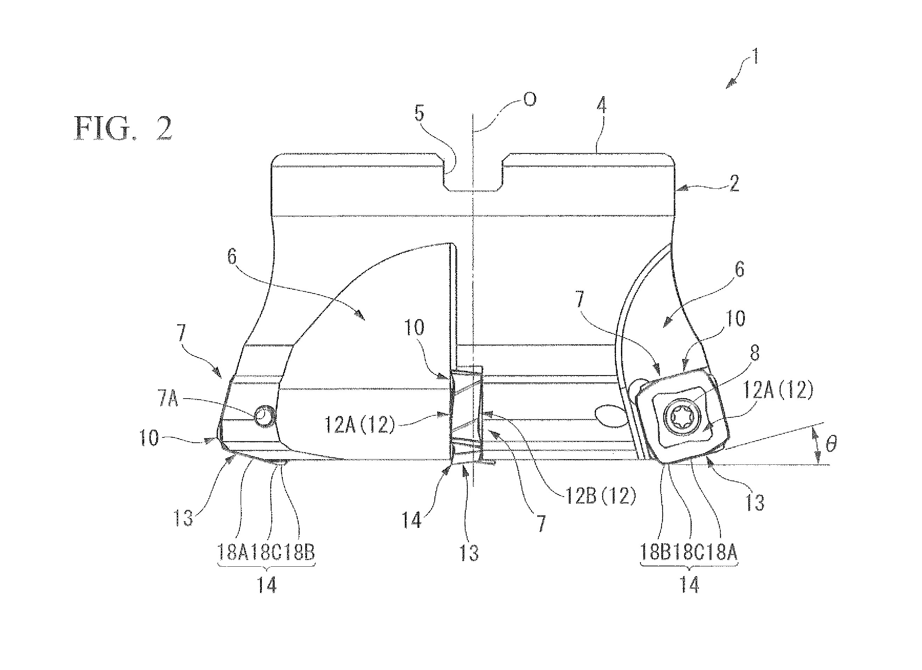

Further, when viewed from the front, a cutting edge angle 0 formed between an extended line of the major cutting edge 18A and the minor cutting edge 18B is from 5° or more to 25° or less. Still further, as shown in Fig. 2, in a state that the cutting insert 10 is mounted on the tool main body 2, a direction at which the minor cutting edge 18B extends is in parallel with a direction orthogonal to the axis line O. The cutting edge angle θ is formed between the direction at which the major cutting edge 18A extends and the direction orthogonal to the axis line O. In the present embodiment, the cutting edge angle θ is 15°. As described above, the major cutting edge 18A of the cutting insert 10 mounted on the tool main body 2 inclines so as to move gradually from the leading end of the tool main body 2 to the rear end, in line with moving from the center of the tool main body 2 in the radial direction to the outside in the radial direction.

Still further, the rake face 12 inclines so as to move backward from the outer face of the insert main body 11, in line with moving away from the major cutting edge 18A. The outer face in this case indicates a virtual flat face passing through the cutting edge 14 of the insert main body 11 and perpendicular to the center axis C. Positions indicated with reference numerals X, Y, and Z in Fig. 5 show respectively one end, the center, and the other end of the major cutting edge 18A, respectively. Then, the rake face 12 is that in which the major cutting edge 18A is greater in rake angle at both ends X, Z thereof than at the center Y thereof.

More specifically, the inclination at a part continuing to the one end X of the major cutting edge 18A on the rake face 12 (variance in the thickness direction per unit length spacing away from the major cutting edge 18A in a direction orthogonal to the thickness direction from the major cutting edge 18A) is greater than the inclination at a part continuing to the center Y of the major cutting edge 18A on the rake face 12. Further, the inclination at a part continuing to the other end Z of the major cutting edge 18A on the rake face 12 is greater than the inclination at the part continuing to the center Y on the rake face 12. In the present embodiment, a rake angle at one end X is approximately equal to that at the other end Z on the rake face 12.

Further, a land 15 substantially constant in width is formed at an outer periphery of the rake face 12 over the entire circumference of the rake face 12 so as to continue to the cutting edge 14. The land 15 is a so-called positive land which inclines so as to move backward gradually from the outer face of the insert main body 11 in line with moving away from the cutting edge 14. Further, a breaker 16 which continues to the land 15 and is greater in inclination than the land 15 is formed over the entire circumference of the rake face 12 inside the land 15 (on the side of the center axis C) on the rake face 12.

Further, the cutting edges 14 arranged on each side of the rake face 12 are in rotation symmetry with each other around the center axis C of the rake face 12. More specifically, one cutting edge 14 on the first rake face 12A is rotated at 90° in a circumferential direction at the center axis C, thereby superimposed on a position of another adjacent cutting edge 14 in the circumferential direction. That is, each cutting edge 14 on the rake face 12A is formed in four-fold symmetry (90° symmetry). Each cutting edge 14 on the second rake face 12B is also formed in four-fold symmetry in the same manner.

Then, of the pair of rake faces 12, each cutting edge 14 on the outer periphery of the first rake face 12A and each cutting edge 14 on the outer periphery of the second rake face 12B have rotation symmetry with each other. More specifically, the pair of rake faces 12A, 12B are formed in two-fold symmetry (in 180° symmetry) with respect to a virtual axis passing through the face center of one flank face 13 of the insert main body 11 and orthogonal to the center axis C.

Fig. 6 is a side view which shows the cutting insert 10 when viewed in a direction opposing the flank face 13. When viewed from the side as shown in Fig. 6, the major cutting edge 18A is formed in a smooth circular-arc shape so as to move backward gradually in the thickness direction, in line with moving from one end adjacent to the corner edge 18C to the other end opposite to the corner edge 18C, and formed in a convex curved shape as a whole.

Further, the flank face 13 is provided with a major flank face 19A continuing to the major cutting edge 18A, a pair of minor flank faces 19B continuing to the minor cutting edges 18B, and a pair of corner flank faces 19C continuing to the corner edges 18C. The flank face 13 is formed in rotation symmetry at the center of the virtual axis passing through the face center. More specifically, the flank face 13 is formed in two-fold symmetry with respect to the virtual axis.

The major flank face 19A is formed substantially in a parallelogram shape and continues at the both ends in the thickness direction respectively to the major cutting edges 18A, 18A. The major flank face 19A is also in parallel in the thickness direction, that is, a so-called negative flank face in which an inclined angle formed between the major flank face 19A and the thickness direction is 0°

Further, the minor flank faces 19B, 19B are formed substantially in a trapezoid shape and arranged respectively on both sides of the major flank face 19A in a direction orthogonal to the thickness direction. Each of these minor flank faces 19B, 19B continues to the minor cutting edge 18B at one of the both ends along the thickness direction and inclines so as to move backward from the outer face of the insert main body 11, while gradually increasing in width, in line with moving away from the end. The outer face in this case indicates a virtual flat face passing through the cutting edge 14 of the insert main body 11 and in parallel with the center axis C. The minor flank face 19B formed as described above is a so-called positive flank face.
The minor flank face 19B is formed substantially in a trapezoid shape, as described above, by which the minor cutting edge 18B can be increased in relief angle to reduce the cutting resistance.

Further, corner flank faces 19C, 19C are formed substantially in a band shape. When viewed from the side in Fig. 6, the corner flank faces 19C, 19C extend so as to incline in the thickness direction and smoothly continue to the major flank face 19A and the minor flank faces 19B, 19B at both ends in the width direction. Each of the corner flank faces 19C, 19C is formed over the entire length in the thickness direction of the flank face 13, with the cross section orthogonal to the extending direction being formed in a convex curved shape.

Each of these corner flank faces 19C, 19C continues to the corner edge 18C at one of the ends along the thickness direction, and an end opposite to the above-described end along the thickness direction is adjacent to the other end of the major cutting edge 18A.
As shown in Fig. 1, the thus constituted flank face 13 faces the leading end of the tool main body 2, in a state with the cutting insert 10 mounted on the tool main body 2. Further, as shown in Fig. 2, the flank face 13 inclines so as to move gradually from the leading end of the tool main body 2 to the rear end, in line with moving from the center of the tool main body 2 in the radial direction to the outside in the radial direction.

Further, as shown in Fig. 7, a connection part 20 in which a cross section orthogonal to the thickness direction is formed in a concave curved shape. The connection part 20 is arranged on the opposite side of the major cutting edge 18A and the corner edge 18C across the minor cutting edge 18B and adjacent to the minor cutting edge 18B is formed on the insert main body 11. The connection part 20 is formed over the entire length in the thickness direction of the insert main body 11. The connection part 20 is formed in a round groove shape and extends in parallel in the thickness direction of the insert main body 11. The connection part 20 is arranged between each of the minor flank faces 19B, 19B adjacent to each other at each corner of the insert main body 11. In the present embodiment, the four connection parts 20 are formed in total.

As so far described, according to the cutting insert 10 of the present embodiment, the pair of rake faces 12 are formed on both sides of the insert main body 11, and the cutting edge 14 is arranged respectively on each side which constitutes an outer periphery of each of the rake faces 12. Therefore, the number of cutting edges 14 available per unit of the cutting insert 10 is increased, which can be expected to extend the service life of a tool. In the present embodiment, a total of eight cutting edges 14 are usable in one cutting insert 10.

That is, the cutting insert 10 is able to use not only four cutting edges 14 installed on each side of the first rake face 12A, of the pair of rake faces 12, but also four cutting edges 14 installed on each side of the second rake face 12B. More specifically, each cutting edge 14 on the outer periphery of the first rake face 12A and each cutting edge 14 on the outer periphery of the second rake face 12B have rotation symmetry with each other. Therefore, where a cutting edge 14 is no longer usable due to damage, wear or the like, the cutting insert 10 is turned inside out and again mounted on the insert seat 7 of the tool main body 2, by which a new cutting edge 14 can be easily arranged at the same position at which the above cutting edge has been mounted. The above constitution makes it possible to greatly increase the number of cutting edges 14 available for one cutting insert 10 and reduce production costs on cutting.

Further, in the insert main body 11, the connection part 20, the cross section of which is formed in a concave curved shape, is arranged so as to be adjacent to the minor cutting edge 18B and formed over the entire length in the thickness direction of the insert main body 11. Therefore, the minor cutting edge 18B is sufficiently secured for the edge length, with chips discharged more efficiently. Still further, even if the cutting edge 14 wears off, axial force is less likely to increase, by which accurate cutting can be secured stably. In addition, since the above-described connection part 20 is formed, the cutting insert 10 can be produced relatively easily and product quality is sufficiently secured, even if each cutting edge 14 on the outer periphery of the first rake face 12A and each cutting edge 14 on the outer periphery of the second rake face 12B have rotation symmetry with each other.

More specifically, where the connection part 20 is formed so as to give a raised-curve cross section or a linear cross section other than the above-described concave curved shape cross section, for example, a part at which the connection part 20 is coupled to the minor cutting edge 18B is brought closer to the major cutting edge 18A, when viewed from the front in a direction opposing the rake face 12. The minor cutting edge 18B is accordingly decreased in edge length. In this case, the minor cutting edge 18B is increased in cutting resistance per unit length, and there is a possibility that the tip of the minor cutting edge 18B may be reduced in strength. Further, a clearance between the connection part 20 and a machined surface of a work piece is not sufficiently secured. Then, chips cut by the minor cutting edge 18B are less likely to pass through the clearance to reduce a discharge efficiency of the chips. There is a possibility that the machined surface may not be secured for accuracy.

The cutting edges 14 arranged on each side of the rake face 12 are formed in rotation symmetry with each other around the center axis C of the rake face 12. Therefore, where a cutting edge 14 is no longer usable due to damage, wear or the like, such a simple work is conducted that the cutting insert 10 is turned around the center axis C and mounted again, by which a new cutting edge 14 can be used. Further, where the cutting insert 10 is again mounted on the insert seat 7 as described above, a new cutting edge 14 is easily arranged at the same position at which the above cutting edge has been mounted, which facilitates the work performance.

Further, the connection part 20 extends in parallel in the thickness direction of the insert main body 11. Thus, the cutting insert 10 can be subjected to press working in the thickness direction and easily produced.

Still further, since the minor flank face 19B of the flank face 13 is a positive flank face that inclines so as to move backward from the outer face of the insert main body 11 in line with moving away from the minor cutting edge 18B, chips can be discharged more efficiently. Thereby, damage to a machined surface of a work piece caused by chips generated on cutting and remaining in the vicinity of the machined surface can be prevented to secure sufficient accuracy of the machined surface.

Further, the cutting edge angle θ is from 5° or more to 25° or less. Therefore, on cutting a work piece by using the replaceable insert-type milling cutter 1 on which the cutting insert 10 is mounted, the cutting edge 14 is reduced in cutting resistance per unit length to sufficiently increase the axial force. That is, where cutting is performed in a constant feeding rate and cutting rate and if the cutting edge angle θ is relatively small as described above, the major cutting edge 18A is in contact with the work piece over a longer distance and chips are decreased in thickness. Thereby, the cutting force is decentralized to the major cutting edge 18A to reliably reduce the cutting resistance of the cutting edge 14 per unit length. Therefore, damage to the tip of the cutting edge 14 or the like is prevented, which can be expected to further extend the service life of a tool.

More specifically, where the cutting edge angle θ is less than 5°, the major cutting edge 18A is unable to cut into a work piece at a sufficient height. In addition, this cutting edge angle is not practically usable on cutting. Where the cutting edge angle is in excess of 25°, the major cutting edge 18A is unable to be in contact with the work piece over a sufficient length. Thus, the cutting edge 14 is not reduced in cutting resistance per unit length to result in decreased axial force. As a result, there is a possibility that the cutting edge 14 may be damaged at an earlier stage due to excessive loads.

Further, the major cutting edge 18A is formed in a convex curved shape when viewed in a direction opposing the flank face 13. It is, therefore, possible to soften the impact to the tip of the major cutting edge 18A when the major cutting edge 18A cuts into a work piece and prevent damage to the major cutting edge 18A. The chip discharge performance also improves.

Still further, the rake face 12 is that in which the major cutting edge 18A is greater in rake angle at the both ends X, Z thereof than at the center Y thereof. Thus, the chip discharge performance further improves.

In addition, the cutting edge 14 is provided with the corner edge 18C which connects smoothly the major cutting edge 18A with the minor cutting edge 18B. It is, therefore, possible to reliably prevent damage to the cutting edge 14. That is, the major cutting edge 18A and the minor cutting edge 18B extend so as to intersect with each other, and where the major cutting edge 18A is coupled to the minor cutting edge 18B simply as they are, an angulated part will be formed. However, in the cutting edge 14, the cornered part is liable to cutting resistance and easily damaged. Thus, this is not preferable. Therefore, as with the present embodiment, the smooth corner edge 18C is formed between the major cutting edge 18A and the minor cutting edge 18B, thereby reliably preventing damage to the cutting edge 14.

Then, according to the replaceable insert-type milling cutter 1 using the above-described cutting insert 10, highly accurate cutting can be performed stably to reduce production costs on cutting.

The present invention shall not be limited to the above-described embodiment and may be modified in various ways within a scope not departing from the gist of the present invention.
For example, in the present embodiment, the major cutting edge 18A extends linearly when viewed from the front as shown in Fig. 7, to which the present invention shall not be, however, limited. The major cutting edge 18A may be formed in a convex curved shape having a gentle curve when viewed from the front.

Further, it is acceptable that the corner edge 18C connects smoothly the major cutting edge 18A with the minor cutting edge 18B. The shape of the connection is not limited to the circular arc shape as described in the present embodiment. It is also acceptable for the cutting edge 14 to not be formed with the corner edge 18C.

Further, the minor flank face 19B of the flank face 13 may be constituted with a plurality of minor flank faces which are changed in inclination in a stepwise manner in line with moving away from the minor cutting edge 18B. That is, for example, the minor flank face 19B may be provided with a first minor flank face continuing to the minor cutting edge 18B and a second minor flank face continuing to the opposite side of the minor cutting edge 18B on the first minor flank face and greater in inclination than the first minor flank face.

Further, the rake face 12 has the land 15 and the breaker 16 formed, to which the present invention shall not be, however, limited.

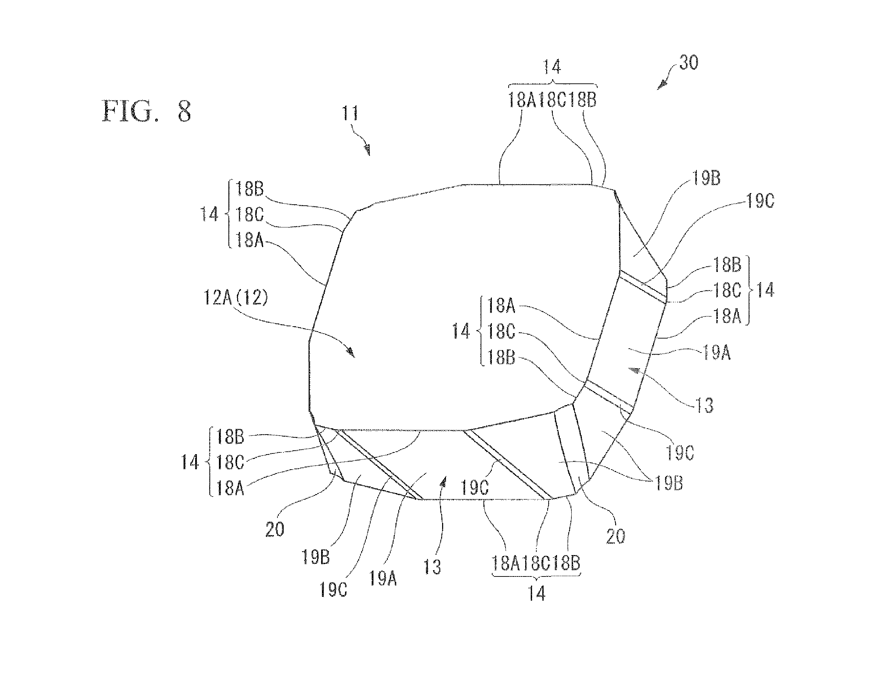

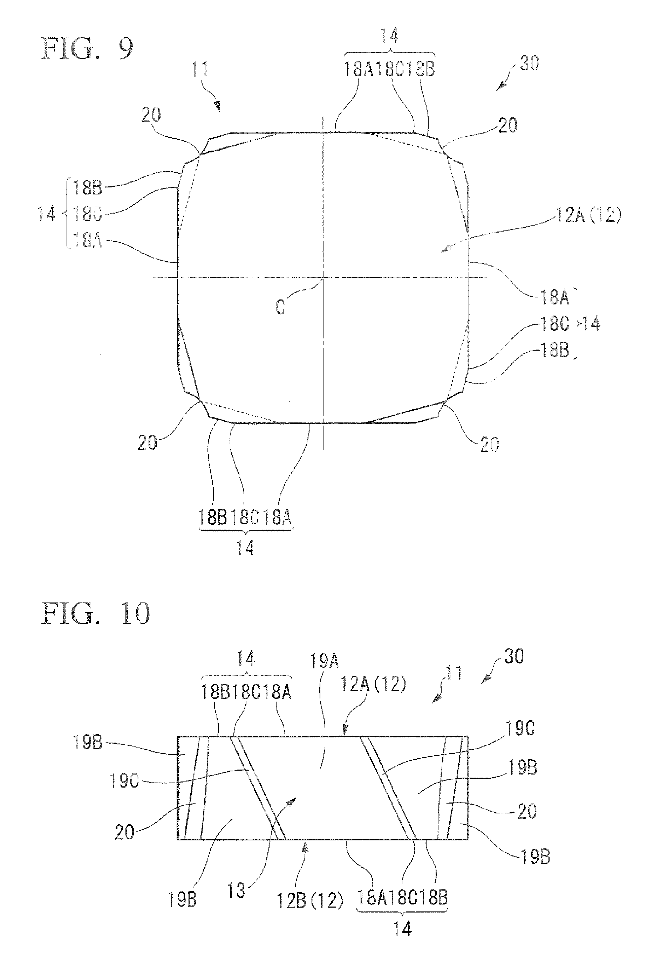

Fig. 8 to Fig. 10 show a cutting insert 30 which is a modified example of the cutting insert 10 of the present embodiment. This cutting insert 30 is formed on a flat face where a pair of rake faces 12 is orthogonal to each other in the thickness direction. In this case, when viewed from the side in Fig. 10, a major cutting edge 18A of a cutting edge 14 is formed linearly. Further, as shown in Fig. 8 to Fig. 10, an insert main body 11 may not be formed with an attachment hole (the through hole 17 in the present embodiment).

Still further, in the present embodiment, the insert main body 11 of the cutting insert 10 is formed in a square flat plate shape, to which the present invention shall not be, however, limited. That is, it is acceptable that the insert main body 11 is formed in a polygonal plate shape and may be formed in a rectangular plate shape, a triangular plate shape, a pentagonal plate shape, a hexagonal plate shape, or the like, other than the square plate shape.

### [Description of Reference Numerals]

- 1:: Replaceable insert-type milling cutter (replaceable insert-type rotating tool)
- 2:: Tool main body
- 10, 30:: Cutting insert
- 11:: Insert main body
- 12:: Rake face
- 12A:: First rake face
- 12B:: Second rake face
- 13:: Flank face
- 14:: Cutting edge
- 18A:: Major cutting edge
- 18B:: Minor cutting edge
- 18C:: Corner edge
- 19A:: Major flank face
- 19B:: Minor flank face
- 20:: Connection part
- C:: Center axis of rake face
- O:: Axis line of tool main body
- T:: Tool rotating direction
- X:: Part continuing to one end of major cutting edge on rake face
- Y:: Part continuing to the center of major cutting edge on rake face
- Z:: Part continuing to the other end of major cutting edge on rake face
- θ:: Cutting edge angle

## Claims

1. A cutting insert comprising:
an insert main body formed in a polygonal plate shape;
a rake face which is a polygonal face of the insert main body;
a flank face continuing to the rake face; and
a cutting edge formed at an intersecting ridge line portion between the rake face and the flank face; wherein:
the rake face is formed on both sides of the insert main body facing outside in the thickness direction to make a pair;
the cutting edge is arranged respectively on each side which constitutes an outer periphery of the rake face;
the cutting edge comprising:
a major cutting edge which is arranged at the center of the side, and
a minor cutting edge which is arranged on one end of the side and extends so as to intersect with a direction at which the major cutting edge extends when viewed in a direction opposing the rake face;
a connection part in which a cross section orthogonal to the thickness direction is formed in a concave curved shape and which is arranged on the opposite side of the major cutting edge across the minor cutting edge and adjacent to the minor cutting edge is formed on the insert main body over the entire thickness direction of the insert main body; and
of the pair of rake faces, each cutting edge on an outer periphery of a first rake face and each cutting edge on an outer periphery of a second rake face have rotation symmetry with each other.

2. The cutting insert according to claim 1, wherein
the cutting edges arranged on each side of the rake face are in rotation symmetry with each other around a center axis of the rake face.

3. The cutting insert according to claim 1 or claim 2, wherein
the connection part extends in parallel in the thickness direction of the insert main body.

4. The cutting insert according to any one of claim 1 to claim 3, wherein
the flank face is provided with a major flank face continuing to the major cutting edge and a minor flank face continuing to the minor cutting edge, and
the minor flank face inclines so as to move backward from an outer face of the insert main body in line with moving away from the minor cutting edge.

5. The cutting insert according to any one of claim 1 to claim 4, wherein
a cutting edge angle formed between an extended line of the major cutting edge and the minor cutting edge is from 5° or more to 25° or less when viewed in a direction opposing the rake face.

6. The cutting insert according to any one of claim 1 to claim 5, wherein
the major cutting edge is formed so as to give a convex curved shape when viewed in a direction opposing the flank face.

7. The cutting insert according to any one of claim 1 to claim 6,
the rake face inclines so as to move backward from the outer face of the insert main body in line with moving away from the major cutting edge, and the major cutting edge is greater in rake angle at both ends of the major cutting edge than at the center of the major cutting edge.

8. The cutting insert according to any one of claim 1 to claim 7, wherein
the cutting edge is provided with a corner edge which is positioned between the major cutting edge and the minor cutting edge to connect smoothly the major cutting edge with the minor cutting edge.

9. A replaceable insert-type rotating tool comprising;
a tool main body which is formed in a disk-like shape; and
the plurality of cutting inserts which are mounted detachably on an outer circumference of the leading end of the tool main body and described in any one of claim 1 to claim 8 and, wherein
the tool main body rotates around an axis line of the tool main body, by which the cutting inserts cut a work piece.
